# EUROPÄISCHE PATENTSCHRIFT

(11) **EP 0 558 785 B1**
(45) Veröffentlichungstag und Bekanntmachung des Hinweises auf die Patenterteilung: **31.01.1996**
(21) Anmeldenummer: 92103813.9
(22) Anmeldetag: 06.03.1992
(51) Int. Cl.: B60H 1/00

(54) **Belüftungsvorrichtung**
Ventilation device
Dispositif de ventilation

(43) Veröffentlichungstag der Anmeldung: 08.09.1993
(73) Patentinhaber: Preh-Werke GmbH & Co. KG, D-97616 Bad Neustadt (DE)
(72) Erfinder:

(56) Entgegenhaltungen:
- EP-A- 0 143 176
- EP-A- 0 363 191
- DE-U- 7 138 451
- FR-A- 2 360 934

## Beschreibung

Die Erfindung betrifft eine Belüftungsvorrichtung in einem Kraftfahrzeug mit mehrstufig einstellbarem Gebläse gemäß dem Oberbegriff des Anspruches 1.

Solche Vorrichtungen sind in Kraftfahrzeugen regelmäßig vorzufinden und demnach wohlbekannt. Das "Kraftfahrtechnische Taschenbuch" der Firma R. Bosch, 20. Auflage, zeigt auf den Seiten 568 und 569 den Stromlaufplan eines Kraftfahrzeuges; im Abschnitt 7 des Stromlaufplanes ist das Gebläse der Belüftungsvorrichtung und seine Einstellbarkeit anhand von Vorwiderständen schematisch dargestellt. Durch das Einstellen verschiedener Gebläsestufen kann die Luftmenge der Belüftungsvorrichtung den Bedürfnissen im Fahrgastraum angepaßt werden.

Die bekannten Belüftungsvorrichtungen verfügen jeweils über einen innerhalb des Armaturenbrettes befindlichen, elektrischen Stufenschalter. Der Stufenschalter ist aus praktischen Gründen unmittelbar verbunden mit einer innerhalb des Fahrgastraumes am Armaturenbrett zugänglichen Handhabe. Der Stellweg der Handhabe und der Schaltablauf bzw. die Kontaktanordnung des Stufenschalters verlaufen dabei gleichsinnig, z.B. längsgerichtet oder kreisförmig. Anhand des Stufenschalters ist der Elektromotor des Gebläses der Belüftungsvorrichtung mit dem Bordnetz des Kraftfahrzeuges verbindbar. Das vom Elektromotor angetriebene Gebläse erzeugt eine Luftströmung im Luftkanal der Vorrichtung. Die Luftströmung belüftet den Fahrgastraum. Das Gebläse ist über diverse Schaltstufen des Stufenschalters stufig stellbar. Dabei werden dem Elektromotor des Gebläses in den einzelnen Schaltstufen im Wert jeweils unterschiedliche Leistungswiderstände vorgeschaltet. Ein vorgeschalteter Leistungswiderstand mindert entsprechend seinem Wert die Antriebsleistung des Elektromotores und ist somit bestimmend für die erzeugte Luftströmung einer Gebläsestufe. Die Leistungswiderstände bestehen üblicherweise aus gewendetem Widerstandsdraht. Wegen ihrer starken, betriebsmäßigen Erhitzung sind die Leistungswiderstände entfernt vom Stufenschalter im Wirkbereich des Gebläses angeordnet, daß heißt, sie ragen in den Luftkanal und werden durch die Luftströmung im Luftkanal gekühlt. Die bekannten Leistungswiderstände bilden eine eigene, geschlossene Baugruppe, die zur Vermeidung von Funkenflug oftmals mit einer Keramikmasse vergossen ist. Die Leistungswiderstände sind durch ein mehradriges Kabel mit dem Stufenschalter und dem Elektromotor elektrisch verbunden.

Bei einer Leistungsaufnahme des Elektromotors von 250 Watt fließen Ströme bis etwa 20 Ampere. Dementsprechend ist der Querschnitt eines Einzelleiters im mehradrigen Verbindungskabel mit 2,5 mm² gewählt. Die Temperatur am Schaltkontakt des Stufenschalters erhöht sich erfahrungsgemäß bei einem Strom von 20A um etwa 30C. Bei Sonneneinstrahlung kann sich der Innenraum eines Kraftfahrzeuges auf z.B. 70C aufheizen, schaltet man dann zu seiner Belüftung das Gebläse auf volle Leistung, so ergeben sich am Schaltkontakt des Stufenschalter, also im Bereich des Armaturenbrettes, bereits Temperaturen um 100C.

Dieser Umstand und die hohe betriebsmäßige Eigenerwärmung der Leistungswiderstände führten zu der bekannten und regelmäßig angewendeten Gliederung einer stufig stellbaren Belüftungsvorrichtung in eine erste Baugruppe einer Schalteinrichtung, mit einem oftmals rastmarkierten Stufenschalter im Armaturenbrett, in eine zweite Baugruppe der Schalteinrichtung mit regelmäßig mehreren Leistungswiderständen im Innenbereich eines Luftkanals, in ein Verbindungsteil, bestehend aus einem mehradrigen Kabel mit hohem Leiterquerschnitt, das die erste Baugruppe mit der zweiten Baugruppe elektrisch verbindet und in eine ebenfalls mit dem Stufenschalter elektrisch verbundene dritte Baugruppe mit einem elektromotorisch angetriebenen Gebläse.

Es sind daneben auch elektronisch steuerbare Belüftungsvorrichtungen bekannt. In der EP-A-0 143 176 ist eine derartige Belüftungsvorrichtung beschrieben, wobei solche Bauteile der elektronischen Steuerungseinrichtung, die eine hohe Verlustleistung aufweisen, auf einer Klappe innerhalb eines Luftkanals angebracht sind. Derartige, meist stufenlos einstellbare Vorrichtungen sind von der Erfindung nicht betroffen.

Neuerdings werden vom Gebläse einer Belüftungsvorrichtung höhere Leistungen abverlangt. Insbesondere dann, wenn im Luftkanal der Vorrichtung ein oder mehrere Filter eingebracht sind, die sich mit fortschreitender Lebensdauer zusetzen können und dadurch ihren Luftwiderstand erhöhend die Belüftung des Fahrgastraumes behindern. Eine solche Behinderung ist durch größere Gebläseleistung zumindest teilweise kompensierbar. Hat man bislang Gebläsemotoren mit einer Leistungsaufnahme von z.B. 250 Watt verwendet, kommen neuerdings Gebläsemotoren mit einer Leistungsaufnahme bis etwa 500 Watt zum Einsatz. Dies mag sich künftig noch weiter steigern. Dabei erhöht sich der maximale Betriebsstrom, z.B. auf 40 Ampere und mehr. Als Folge des höheren Stromes ist der Leiterquerschnitt des mehradrigen Verbindungskabels der Schalteinrichtung auf 4 mm² zu vergrößern. Ein solches Kabel ist erheblich teurer und weniger handlich. Eine andere Folge des höheren Stromes ist eine weitergehende Kontakterwärmung im Stufenschalter, was die eigene Lebensdauer und die benachbart angeordneter, insbesondere elektronischer Bauelemente beeinträchtigt. Letzteres wäre beispielsweise anhand eines Stufenschalters mit geringerem Kontaktwiderstand zu bewältigen, jedoch fehlt einem solchen Leistungsschalter oftmals die gewünschte leichtgängige Stellbarkeit und die Lebensdauer. Den geschilderten, durch die Leistungserhöhung ausgelösten Unwägbarkeiten und Teuerungen bei einer Belüftungsvorrichtung der eingangs bezeichneten Art durch ein in anderer Weise verbessertes Konzept entgegenzuwirken ist Aufgabe der Erfindung.

Als Lösung der Aufgabe ist vorgeschlagen, daß sich der Stufenschalter ebenfalls, gleich den Leistungswiderständen, im Wirkbereich des Gebläses befindet, wobei er eine bauliche Einheit mit den Leistungswiderständen ausbildet, und wobei der Stufenschalter mittels eines Bowdenzuges von einer Handhabe im Fahrgastraum aus betätigbar ist. Dies besagt insbesondere, daß der Stufenschalter zumindest partiell von der Luftströmung beaufschlagt ist. Überwärme, z.B. durch den Nennstrom erzeugte Kontakterwärmung, ist dann gut anhand der Luftströmung ableitbar. Der Nennstrom fließt bei maximaler Gebläseleistung. Wegen der einrichtbaren, räumlichen Nähe des Stufenschalters zu den Leistungswiderständen genügt ein entsprechend verkürztes Verbindungskabel; bei einer baulichen Vereinigung von Stufenschalter und Leistungswiderständen entfällt es sogar. Dies ist ein weiterer Vorteil der vorgeschlagenen Belüftungsvorrichtung gegenüber den bekannten Vorrichtungen.

Die mit der Erfindung geschaffene räumliche Trennung von Stufenschalter und Handhabe läßt Beeinträchtigungen des Einstellvorganges vermuten. Es sind insbesondere auch Weg-Toleranzen zu befürchten, die eine Übereinstimmung zwischen einer optischen oder fühlbaren Markierung der Handhabe und einer zugeordneten Schaltposition im Stufenschalter gefährden können. Solche von der Erfindung eher ablenkende Sachverhalte sind durch besondere Aufmerksamkeit bei der Auswahl geeigneter Stellmittel und bei der Konzeption eines geeigneten Stufenschalters zu beachten. Gut nutzbar sind z.B. Stellmittel, die keine schematische Zuordnung oder Ausrichtung erfordern. Dadurch erlangt man Freiheiten beim Plazieren einer Handhabe einerseits und des Stufenschalters andererseits. Ein Bowdenzug ist beispielsweise ein solches Stellmittel. Vorteilhaft sind auch Stellmittel oder Stelleinrichtungen, die eine Stellbewegung umformen, z.B. eine Drehbewegung in eine Längsbewegung. Ebenso vorteilhaft sind Stellmittel, die in der Lage sind, Stellwege zu kürzen oder zu verlängern, z.B. Stellhebel, Stellgetriebe. Derartige Stellmittel vermögen designbestimmte Stellwege einer Handhabe den Erfordernissen des Stufenschalters anzupassen. Mit solchen Stellmitteln ergeben sich aber auch Freiheiten z.B. bei der Bemessung der Schaltwege im Stufenschalter, was hilfreich ist, um Bau- oder Weg-Toleranzen zu beherrschen. Dabei wird man einen entsprechenden Stufenschalter so konzipieren, daß die größtmögliche Weg-Toleranz über die Länge des Schalthubes zu bewältigen ist. Vorzugsweise wählt man ein von den Stellmitteln stellbares Isolierteil als Schaltglied des Stufenschalters, das sich mit entsprechendem Stellhub an einem stationär gehaltenen Schaltkontaktpaar positioniert und dieses je nach Bauart öffnet oder schließt. Kontakttoleranz entfällt bei einer solchen Anordnung.

Nachstehend wird ein vorteilhaftes Ausführungsbeispiel der Erfindung anhand von Zeichnungen beschrieben. Die Zeichnungen zeigen in
- Figur 1: eine erfindungsgemäße Belüftungsvorrichtung, schematisch dargestellt im Umriß eines Kraftfahrzeuges,
- Figur 2: eine Handhabe und deren Stellbewegung übertragende Stellmittel in einer Vorrichtung gemäß Figur 1 im Schnitt,
- Figur 3: die Stellmittel gemäß Figur 2, längs der Linie III-III,
- Figur 4: einen von den Stellmitteln gemäß Figur 2 angetriebenen Stufenschalter,
- Figur 5: den Stufenschalter aus Figur 4 in Seitenansicht längs der Linie V-V,
und
- Figur 6: ein Ersatzschaltbild des Stufenschalters.

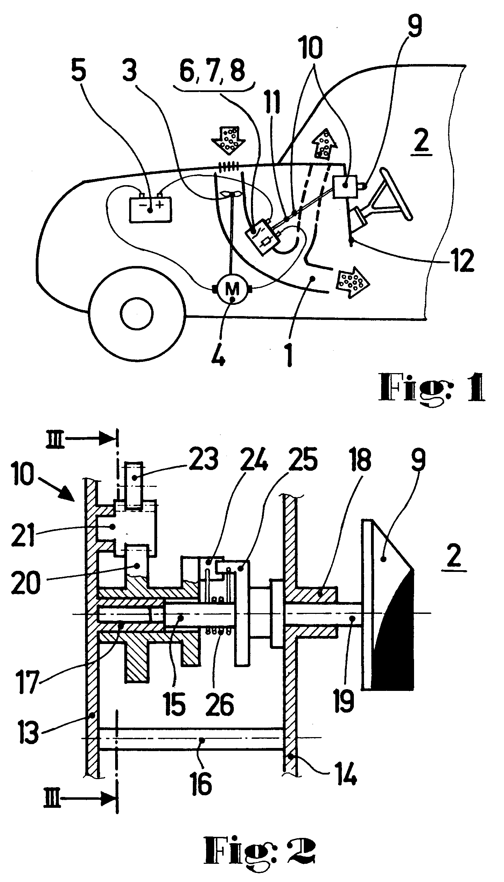

In Figur 1 ist eine erfindungsgemäße Belüftungsvorrichtung schematisch dargestellt. Dabei ist innerhalb der Kontur eines PKW-Vorderteiles ein Luftkanal (1) erkennbar. Durch den Luftkanal (1) wird im Motorraum des Fahrzeuges erwärmte oder von außen einströmende Luft zum Fahrgastraum (2) geführt und dort verteilt. Die Luftströmung im Luftkanal (1) wird insbesondere bei stehendem Fahrzeug von einem Gebläse (3) unterstützt.

Das Gebläse (3) wird durch einen Gebläsemotor (4) angetrieben. Gebläse (3) und Gebläsemotor (4) bilden regelmäßig eine Baueinheit. Der Gebläsemotor (4) wird aus dem Bordnetz (5) des Fahrzeuges elektrisch versorgt; er ist mittels einer Schalteinrichtung (6) vom Bordnetz (5) trennbar und damit abschaltbar. Die Schalteinrichtung (6) ist am Luftkanal (1) befestigt; sie ragt teilweise in den Luftkanal (1) und wird dort von der Luftströmung im Luftkanal (1) gekühlt. Die Luftströmung wird von dem Gebläse (3) erzeugt. Somit befindet sich die Schalteinrichtung (6) im Wirkbereich des Gebläses (3). Die Schalteinrichtung (6) besteht aus einem mehrstufigen Stufenschalter (7) und einer Gruppe von Leistungswiderständen (8). Im Fahrgastraum (2) befindet sich eine Handhabe (9) zum Einstellen des Stufenschalters (7). Stellbewegungen der Handhabe (9) werden anhand von Stellmitteln (10, 11) auf den Stufenschalter übertragen. Die Stellbewegungen der Handhabe (9) werden dabei von den Stellmitteln (10) umgeformt und übersetzt und so den Erfordernissen des Stufenschalters angepaßt. Die Stellbewegung überträgt ein Bowdenzug (11). Der Stufenschalter (7) hat mehrere Schaltstufen für unterschiedliche Gebläseleistungen.

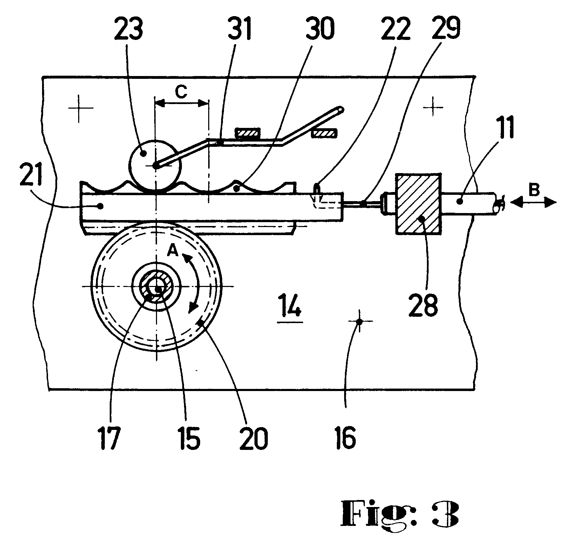

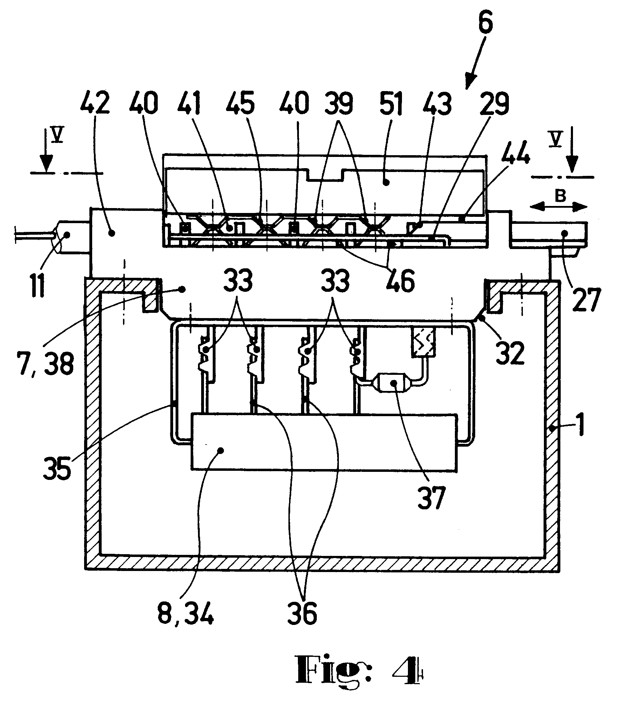

Teile der Stellmittel (10), vornehmlich solche zur Anpassung von Stellbewegungen, und die Handhabe (9) sind am Armaturenbrett (12) des Fahrzeuges angebracht. Dort ist gemäß Figur 2 zwischen Seitenwänden (13, 14) eine Stellwelle (15) gelagert. Die Seitenwände (13, 14) sind anhand von Zwischenstücken (16) auf Abstand gehalten. Die Seitenwände (13, 14) weisen Lager (17, 18) aus, in denen die Stellwelle (15) lagert. Die Stellwelle (15) durchragt die eine Seitenwand (14). Das sich dabei ausbildende, freie Wellenende (19) trägt die im Fahrgastraum (2) betätigbare Handhabe (9). Auf der Außenfläche des einen Lagers (17) ist ein Zahnritzel (20) drehgelagert, das wiederum eine in der Seitenwand (13) geführte Zahnstange (21) antreibt. Die Zahnstange an die gemäß Figur 3 ein Bowdenzug (11) angreift, ist durch ein Rastrad (23) beschwert. Dem Zahnritzel (20) ist ein Treibarm (24) angeformt. Die Stellwelle (15) ist mit einem V-förmigen gestalteten Stellarm (25) ausgestattet. Der Treibarm (24) greift in die V-Form des Stellarmes (25) und wird von diesem drehgestellt. Stellarm (25) und Treibarm (24) sind bis zur gegenseitigen Anlage durch ein Federteil (26) elastisch verbunden. Das Federteil (26) unterstützt die Wirkung des Rastrades (23). Anhand der Stellmittel (10) wird eine Stellbewegung der Handhabe (9) auf die Zahnstange (21) übertragen, wobei gemäß Figur 3 eine Drehung des Zahnritzels (Pfeil A) in einen Hub (Pfeil B) der Zahnstange (21) bzw. des Bowdenzuges (11) gewandelt wird. Der Bowdenzug (11) überträgt den Hub (B) als Teil der Stellmittel (10) auf ein Stellglied (27, Figur 4) des Stufenschalters (7). Der Bowdenzug (11) ist antriebsseitig an einer Aufnahme (28) verankert. Das freigelegte Ende seines Stelldrahtes (29) ist durch Einhaken (22) mit der Zahnstange (21) bewegungsverbunden. Die Zahnstange (21) ist mit Rastnocken (30) versehen. Das mittels einem Federteil (31) vorgespannte Rastrad (23) wirkt mit den Rastnocken (30) im Sinn einer an der Handhabe (9) erkennbaren Rastung zusammen. Die Raststufen (C) entsprechen den Schaltstufen im Stufenschalter (7).

In den Figuren 4 und 5 ist die Schalteinrichtung (6) der Belüftungsvorrichtung dargestellt. Die Schalteinrichtung (6) besteht aus einem mehrstufigen Stufenschalter (7) und aus einer Mehrzahl von Leistungswiderständen (8). Stufenschalter (7) und Leistungswiderstände (8) bilden eine bauliche Einheit, die an eine Öffnung (32) des Luftkanals (1) angeflanscht ist. Dabei ragen Teile des Stufenschalters (7), insbesondere seine gut wärmeleitend ausgebildeten Schaltkontaktanschlüsse (33), und die daran angeschlossenen Leistungswiderstände (8) in den Luftkanal (1) hinein und sind durch den dort vorherrschenden Luftstrom kühlbar. Die Leistungswiderstände (8) sind durch eine Keramikmasse eingebettet, sie bilden einen Widerstandsblock (34) aus mehreren Einzelwiderständen (8, 8', 8''). Eine Manschette (35) hält den Widerstandsblock (34) am Stufenschalter (7). Die Anschlüsse (36) der einzelnen Leistungswiderstände (8) ragen aus dem Widerstandsblock (34), sie (36) sind jeweils zu einem Schaltkontaktanschluß (33) des Stufenschalters (7) geführt und mit diesem durch Krampen elektrisch verbunden. Eine Thermosicherung (37) schützt die Schalteinrichtung (6) vor Überhitzung, sie unterbricht erforderlichenfalls den Stromfluß zum Gebläsemotor (4). Das Gehäuse (38) des Stufenschalters (7) besteht aus temperaturbeständigem Kunststoff. Im Gehäuse (38) befindliche Schaltkontakte (39) sind paarweise angeordnet, sie sind paarweise stationär gehalten. Im Ausführungsbeispiel liegen die Schaltkontaktpaare (39) außerhalb des Luftkanals (1), sie könnten in einer alternativen Ausgestaltung der Erfindung selbstverständlich auch innerhalb des Luftkanals (1) angeordnet sein. Stege (40) trennen die einzelnen Schaltkontaktpaare (39) und bilden Schaltkammern (41). Das treibende Ende des Bowdenzuges (11) ist an einer Aufnahme (42) am Gehäuse (38) des Stufenschalters (7) befestigt. Der diesseits freigelegte Stelldraht (29) des Bowdenzuges (11) ist verlängert und durch Einhängen mit dem Stellglied (27) bewegungsverbunden. Das Stellglied (27) ist im Gehäuse (38) in Hubrichtung (B) beweglich geführt, es folgt zwischen Endstellungen den Stellbewegungen der Handhabe (9). Das Stellglied (27) ist ein Isolierteil mit einer Schräge (43) und einer Gleitfläche (44). Wird das Stellglied (27) vom Stelldraht (29) des Bowdenzuges (11) an den Schaltkontaktpaaren (39) vorbeigeführt, dann werden diese je nach Hubrichtung reihenweise geöffnet oder geschlossen.

Im Ausführungsbeispiel sind die Schaltkontakte (45, 46) eines Schaltkontaktpaares (39) bei Abwesenheit des Stellgliedes (27) geschlossen. Der eine Schaltkontakt (46) ist das entgegengesetzte Ende seines Schaltkontaktanschlusses (33). Der zweite Schaltkontakt (45), der elektrisch mit einem Sammelanschluß (47) verbunden ist, ist durch eine Führungsnase (48) über seine Kontaktzone (49) hinaus verlängert. Das bewegte Stellglied (27) gleitet mit seiner Schräge (43) längs der Linie (50) unter die Führungsnase (48) und liftet diese auf seine Gleitfläche (44), dabei die betroffenen Schaltkontakte (45, 46) trennend. - Es sind in einer weiteren Ausgestaltung der Erfindung auch im Normalzustand offene Schaltkontakte (45, 46) denkbar, die anhand eines alternativen Stellgliedes kontaktieren. - Der Stufenschalter (7) ist mit einer Klappe (51) staubdicht verschlossen. In Figur 5 sind die elektrischen Außenanschlüsse erkennbar, wobei der eine Leiter (52) zum Bordnetz (5) führt und der andere Leiter (53) zum Gebläsemotor (4).

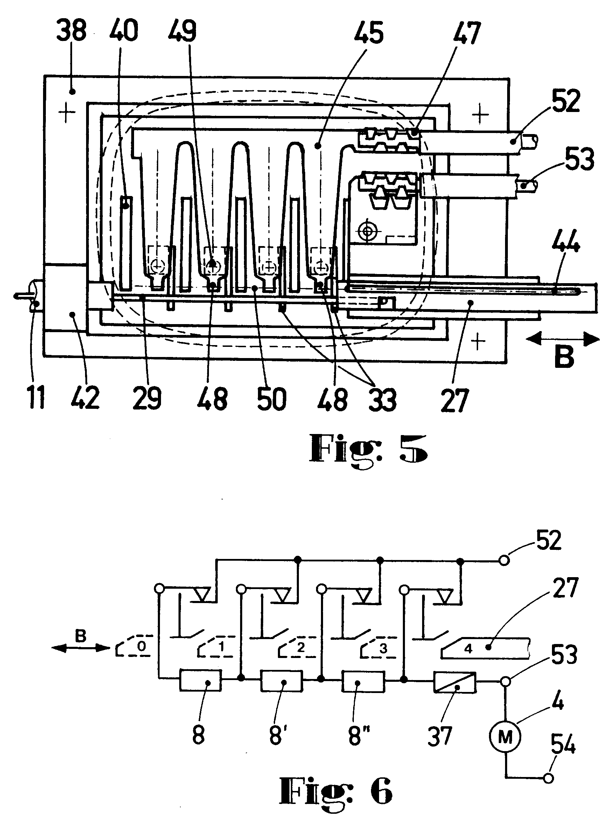

Das Ersatzschaltbild in Figur 6 läßt die Arbeitsweise der stufig schaltbaren Belüftungsvorrichtung erkennen. Anhand der angedeuteten Position '0' bis '4' des Stellgiedes (27) sind fünf Schaltpositionen des Stufenschalters angezeigt. In Position '0' ist der Strompfad vom Anschluß (52) zum Anschluß (54) unterbrochen, der Gebläsemotor (4) ist stillgelegt. In Position '1' ist ein Schaltkontaktpaar geschlossen; der Strompfad führt nunmehr vom Anschluß (52) kommend über die drei Leistungswiderstände mit Widerstandswerten von beispielsweise 1,6 Ohm (8), 0,8 Ohm (8') und 0,4 Ohm (8'') und über die Thermosicherung (37) zum Gebläsemotor (4) und über den Anschluß (54) zurück zum Bordnetz (5); der zwischengeschaltete Widerstand von insgesamt 2,8 Ohm bewirkt in dieser Schaltstufe eine geringe Gebläseleistung. In den Positionen '2' und '3' verringert sich der zwischengeschaltete Widerstandswert stufenweise und die Gebläseleistung erhöht sich entsprechend. In Position '4' verläuft der Strompfad unmittelbar vom Anschluß (52) über die Thermosicherung (37) zum Gebläsemotor (4); das Gebläse entfaltet infolge der unwirksamen Leistungswiderstände (8, 8', 8'') seine volle Leistung.

### Bezugszeichenliste

- 1: Luftkanal
- 2: Fahrgastraum
- 3: Gebläse
- 4: Gebläsemotor
- 5: Bordnetz
- 6: Schalteinrichtung
- 7: Stufenschalter
- 8, 8', 8'': Leistungswiderstand
- 9: Handhabe
- 10: Stellmittel
- 11: Bowdenzug
- 12: Armaturenbrett
- 13: Seitenwand
- 14: Seitenwand
- 15: Stellwelle
- 16: Zwischenstück
- 17: Lager
- 18: Lager
- 19: Wellenende
- 20: Zahnritzel
- 21: Zahnstange
- 22: Haken
- 23: Rastrad
- 24: Treibarm
- 25: Stellarm
- 26: Federteil
- 27: Stellglied
- 28: Aufnahme
- 29: Stelldraht
- 30: Rastnocke
- 31: Federteil
- 32: Öffnung
- 33: Schaltkontaktanschluß
- 34: Widerstandsblock
- 35: Manschette
- 36: Anschluß
- 37: Thermosicherung
- 38: Gehäuse
- 39: Schaltkontaktpaar
- 40: Steg
- 41: Schaltkammer
- 42: Aufnahme
- 43: Schräge
- 44: Gleitfläche
- 45: Schaltkontakt
- 46: Schaltkontakt
- 47: Sammelanschluß
- 48: Führungsnase
- 49: Kontaktzone
- 50: Linie
- 51: Klappe
- 52: Anschluß (-Leiter)
- 53: Anschluß (-Leiter)
- 54: Anschluß
- A: Drehsinn
- B: Hubrichtung
- C: Raststufe

## Patentansprüche

1. Belüftungsvorrichtung eines Kraftfahrzeuges, insbesondere zur Belüftung des Fahrgastraumes (2), mit einem Luftkanal (1), in dem sich ein durch einen Elektromotor (4) angetriebenes, mehrstufig einstellbares Gebläse (3) befindet und mit einer elektromechanischen Schalteinrichtung (6) für das mehrstufige Einstellen des Gebläses (3), wobei im Wirkbereich des Gebläses (3) befindliche Leistungswiderstände (8, 8', 8'') dem Elektromotor (4) anhand eines vom Fahrgastraum (2) aus mechanisch betätigbaren Stufenschalters (7) stufig vorschaltbar sind,
dadurch gekennzeichnet,
daß sich der Stufenschalter (7) ebenfalls im Wirkbereich des Gebläses (3) befindet, wobei er eine bauliche Einheit mit den Leistungswiderständen (8, 8', 8'') ausbildet, und wobei der Stufenschalter (7) mittels eines Bowdenzuges (11) von einer Handhabe (9) im Fahrgastraum (2) aus betätigbar ist.

2. Belüftungsvorrichtung nach Anspruch 1,
dadurch gekennzeichnet,
daß sie Einrichtungen (20, 21) aufweist, die bewirken, daß eine Stellbewegung der Handhabe (9) umgeformt und/oder übersetzt bzw. untersetzt wird.

3. Belüftungsvorrichtung nach Anspruch 1 oder 2,
dadurch gekennzeichnet,
daß die bauliche Einheit aus Leistungswiderständen (8, 8', 8'') und dem Stufenschalter (7) an eine Öffnung (32) des Luftkanals (1) angeflanscht ist und zumindest teilweise in diesen hineinragt.

4. Belüftungsvorrichtung nach einem der Ansprüche 1 bis 3,
dadurch gekennzeichnet,
daß die Leistungswiderstände (8, 8', 8'') innerhalb des Luftkanals (1) und der Stufenschalter (7) außerhalb diesem angeordnet sind.

5. Belüftungsvorrichtung nach einem der Ansprüche 1 bis 4,
dadurch gekennzeichnet,
daß die innerhalb des Luftkanals (1) befindlichen Leistungswiderstände (8, 8', 8'') durch Ankrampen unmittelbar elektrisch verbunden sind mit ebenfalls innerhalb des Luftkanals (1) befindlichen, gut wärmeleitend ausgebildeten Schaltkontaktanschlüssen (33) des Stufenschalters (7).

6. Belüftungsvorrichtung nach einem der Ansprüche 1 bis 5,
dadurch gekennzeichnet,
daß der Stufenschalter (7) mit stationär gehaltenen Schaltkontaktpaaren (39) ausgestattet ist und ein von den Stellmitteln (10) getriebenes Isolierteil (27) die Schaltkontaktpaare (39) nacheinander öffnet oder schließt.

## Claims

1. Ventilation device of a motor vehicle, in particular to ventilate the passenger area (2), having an air channel (1) in which there is a fan (3) driven by an electric motor (4) and adjustable to several levels, and having an electromechanical switching device (6) for the multilevel adjustment of the fan (3), whereby power resistors (8, 8', 8'') located in the operating region of the fan (3) can be connected in stages in series with the electric motor (4) with the aid of a step switch (7) mechanically operable from the passenger area (2), characterized in that the step switch (7) is likewise located in the operating region of the fan (3), whereby it forms a structural unit with the power resistors (8, 8', 8''), and whereby the step switch (7) can be operated by means of a Bowden cable (11) by a handle (9) in the passenger area (2).

2. Ventilation device according to claim 1, characterized in that it has devices (20, 21) which have the effect that an adjusting movement of the handle (9) is changed and/or stepped down and stepped up.

3. Ventilation device according to claim 1 or 2, characterized in that the structural unit of power resistors (8, 8', 8'') and the step switch (7) is flange-connected to an opening (32) of the air channel (1) and projects at least partially therein.

4. Ventilation device according to one of claims 1 to 3, characterized in that the power resistors (8, 8', 8'') are arranged within the air channel (1) and the step switch (7) is arranged outside of it.

5. Ventilation device according to one of claims 1 to 4, characterized in that the power resistors (8, 8', 8'') located within the air channel (1) are electrically connected by means of clamping directly with switching contact terminals (33) of the step switch (7) which are likewise located within the air channel (1) and are formed to have good heat-conducting properties.

6. Ventilation device according to one of claims 1 to 5, characterized in that the step switch (7) is equipped with switching contact pairs (39) which are kept stationary, and an insulating part (27) driven by the adjusting means (10) successively opens or closes the switching contact pairs (39).

## Revendications

1. Dispositif de ventilation de véhicule automobile, destiné en particulier à la ventilation de l'habitacle (2), comportant un canal (1) destiné à l'air, dans lequel se trouve une soufflerie (3) entraînée par un moteur électrique (4), susceptible d'être réglé sur plusieurs paliers et comportant un dispositif de commutation électromécanique (6) destiné au réglage sur plusieurs paliers de la soufflerie (3), des résistances de puissance (8, 8', 8'') se trouvant dans la zone d'action de la soufflerie (3) pouvant être branchées en série avec le moteur électrique (4) par paliers, au moyen d'un commutateur fonctionnant par paliers (7) susceptible d'être actionné mécaniquement à partir de l'habitacle (2), caractérisé en ce que le commutateur fonctionnant par paliers (7) se trouve également dans la zone d'action de la soufflerie (3), en constituant un sous-ensemble avec les résistances de puissance (8, 8', 8'') et en pouvant être actionné au moyen d'une transmission à câble (11) grâce à une manette (9) située dans l'habitacle (2).

2. Dispositif de ventilation selon la revendication 1, caractérisé en ce qu'il présente des dispositifs (20, 21) qui entraînent le fait qu'un déplacement de réglage de la manette (9) est transformé et/ou est multiplié ou démultiplié.

3. Dispositif de ventilation selon la revendication 1 ou 2, caractérisé en ce que le sous-ensemble constitué des résistances de puissance (8, 8', 8'') et du commutateur fonctionnant par paliers, est bridé sur une ouverture (32) du canal (1) destiné à l'air et dépasse au moins partiellement dans celui-ci.

4. Dispositif de ventilation selon l'une des revendications 1 à 3, caractérisé en ce que les résistances de puissance (8, 8', 8'') sont disposées à l'intérieur du canal (1) destiné à l'air et en ce que le commutateur fonctionnant par paliers (7) est disposé à l'extérieur de ce canal.

5. Dispositif de ventilation selon l'une des revendications 1 à 4, caractérisé en ce que les résistances de puissance (8, 8', 8'') qui se trouvent à l'intérieur du canal (1) destiné à l'air, sont connectées électriquement directement en étant accrochées à des bornes (33) de contact de commutation, bonnes conductrices de la chaleur, du commutateur fonctionnant par paliers (7), qui se trouvent également à l'intérieur du canal (1) destiné à l'air.

6. Dispositif de ventilation selon l'une des revendications 1 à 5, caractérisé en ce que le commutateur fonctionnant par paliers (7) est équipé de paires (39) de contacts de commutation maintenus de façon fixe et en ce qu'une pièce isolante (27) entraînée par les moyens de réglage (10) ouvre ou ferme les paires (39) de contact de commutation.
